# EUROPEAN PATENT APPLICATION

(11) **EP 2 472 754 A1**
(43) Date of publication of application: **04.07.2012**
(21) Application number: 11817290.7
(22) Date of filing: 06.05.2011
(51) Int. Cl.: H04J 3/06

(54) **A METHOD FOR REALIZING TIME AND CLOCK SYNCHRONIZATION AND A TRANSMISSION DEVICE THEREOF**

(30) Priority: 09.11.2010 CN 201010538194
(71) Applicant: Huawei Technologies Co., Ltd., Shenzhen, Guangdong 518129 (CN)
(72) Inventor: LI, Mingchun, Shenzhen Guangdong 518129 (CN)
(74) Representative: Barth, Stephan Manuel
(86) International application number: PCT/CN2011/073732
(87) International publication number: WO 2012/062089

(57) **Abstract**

A transport device and a clock and time synchronization thereof are disclosed. The transport device sends data frames to a peer transport device and records the sending time of the frame header of each data frame, inserts a generated message to the data frames, and uses the sending time of the frame header of the data frame that carries the message header as a sending time stamp. The transport device receives data frames from the peer transport device and records the receiving time of the frame header of each data frame, identifies a message header in the data frames, and uses the receiving time of the frame header of a data frame carrying the message header as a receiving time stamp. The transport device performs calculations on a series of paired sending time stamps and receiving time stamps and adjusts its clock frequency and time according to the calculation results to synchronize the clock and time between transport devices.

## Description

This application claims priority to Chinese Patent Application No. 201010538194.2, filed with the Chinese Patent Office on November 9, 2010 and entitled "TRANSPORT DEVICE AND CLOCK AND TIME SYNCHRONIZATION METHOD THEREOF", which is incorporated herein by reference in its entirety.

### FIELD OF THE INVENTION

The present invention relates to the field of network clock and time synchronization, and in particular, to a transport device and a clock and time synchronization method thereof.

### BACKGROUND OF THE INVENTION

According to the time synchronization requirement of a current network, an Ethernet implements time synchronization based on IEEE 1588 v2 and principle, but the time synchronization technology for a frame structure based OTN or SDH network is not yet developed. The full name of OTN is Optical Transport Network (Optical Transport Network), and the full name of SDH is Synchronous Digital Hierarchy (Synchronous Digital Hierarchy, SDH).

In a compound network architecture composed of a frame structure based OTN or SDH network and a packet structure based network (such as an Ethernet), when a service is accessed from the packet structure based network to the OTN or SDH network, a transport device must map and de-map the service, thus causing a large Packet Delay Variable (Packet Delay Variable, PDV). As a result, the transport device is unable to calculate the precise time according to the network delay and therefore is unable to synchronize time with a peer transport device.

### SUMMARY OF THE INVENTION

In view of the above, embodiments of the present invention provide a transport device and a clock and time synchronization method thereof to implement clock and time synchronization in an OTN or SDH network traversing an Ethernet.

A clock and time synchronization method includes:
inserting, by a first transport device after slicing a generated synchronization message, slices in predetermined idle overhead bytes of data frames, using the sending time of a predetermined bit of a data frame related to a message header of the synchronization message as a first time stamp t1, and sending the first time stamp t1 to a second transport device, where the data frames are OTN or SDH frames;
receiving, by the second transport device, the data frames sent by the first transport device, identifying the message header of the synchronization message in the received data frames, and using the receiving time of the predetermined bit of the data frame related to the message header as a second time stamp t2;
sending, by the second transport device, data frames to the first transport device, inserting slices to predetermined idle overhead bytes of the data frames after slicing a generated delay request message, and using the sending time of a predetermined bit of a data frame related to a message header of the delay request message as a third time stamp t3;
receiving, by the first transport device, the data frames sent by the second transport device, identifying the message header of the delay request message in the received data frames, using the receiving time of the predetermined bit of the data frame related to the message header as a fourth time stamp t4, and sending the fourth time stamp t4 to the second transport device; and
performing, by the second transport device, calculations on the first time stamp t1, second time stamp t2, third time stamp t3, and fourth time stamp t4 and adjusting clock frequency and time according to calculation results to synchronize clock and time with the first transport device.

A transport device includes a frame processing module, a time stamp processing module, a message identifying module, a message processing module, a message slicing module, a synchronization processing module, and a clock module, wherein:
the frame processing module receives data frames from a peer transport device, identifies a predetermined bit of each data frame, and triggers the time stamp processing module to record the receiving time of the predetermined bit;
the time stamp processing module triggers the message identifying module to identify a message header of a synchronization message carried in the data frames and uses the receiving time of the predetermined bit of a data frame related to the message header as a second time stamp t2;
the message identifying module also extracts messages carrying a first time stamp t1 and a fourth time stamp t4 from the data frames received by the frame processing module, and triggers the message processing module to extract the first time stamp t1 and fourth time stamp t4 from the messages, where the first time stamp t1 is the time when the predetermined bit of a data frame related to the message header of the synchronization message is sent by the peer transport device and the fourth time stamp t4 is the time when the predetermined bit of a data frame related to the message header of a delay request message is received by the peer transport device;
the message processing module also sends the delay request message to the message slicing module;
the message slicing module slices the delay request message to multiple data slices;
the frame processing module inserts the data slices one by one to data frames and sends the data frames to the peer transport device, identifies the predetermined bit of each data frame, and triggers the time stamp processing module to record the sending time of the predetermined bit;
the time stamp processing module triggers the message slicing module to identify the message header of the delay request message and uses the sending time of the predetermined bit of a data frame related to the message header as a third time stamp t3; and
the synchronization processing module performs calculations on the first time stamp t1, second time stamp t2, third time stamp t3, and fourth time stamp t4 and adjusts the clock frequency and time of the clock module according to the calculation results to synchronize the clock and time with the peer transport device.
In the embodiments of the present invention, a transport device uses the sending or receiving time of the predetermined bit of a data frame related to a message header as a time stamp, performs calculations on a series of paired time stamps, and adjusts clock frequency and time of the transport device according to the calculation results to synchronize the clock and time between transport devices in an OTN or SDH network.

### BRIEF DESCRIPTION OF THE DRAWINGS

The accompanying drawings herein are provided to further explain the present invention and constitute a part of this application, but do not limit the present invention.

FIG. 1 is a network architecture diagram where a frame structure based OTN or SDH network is connected to an Ethernet via transport devices, the transport devices include a first transport device and a second transport device;

FIG. 2 is a function block diagram of the first transport device in FIG. 1;

FIG. 3 is a schematic diagram where the slices of a message are inserted to OTN or SDH frames and a time stamp is generated;

FIG. 4 is a schematic structural diagram of an SDH frame;

FIG. 5 is a schematic structural diagram of an OTN frame;

FIG. 6 is a function block diagram of the second transport device in FIG. 1; and

FIG. 7 is a flowchart of a method for clock and time synchronization between the second transport device and the first transport device in FIG. 1.

### DETAILED DESCRIPTION OF THE EMBODIMENTS

To help those of ordinary skill in the art understand and implement the present invention, the embodiments of the present invention are described in detail with reference to the accompanying drawings now. The exemplary embodiments of the present invention herein are used to explain the present invention but do not limit the present invention.

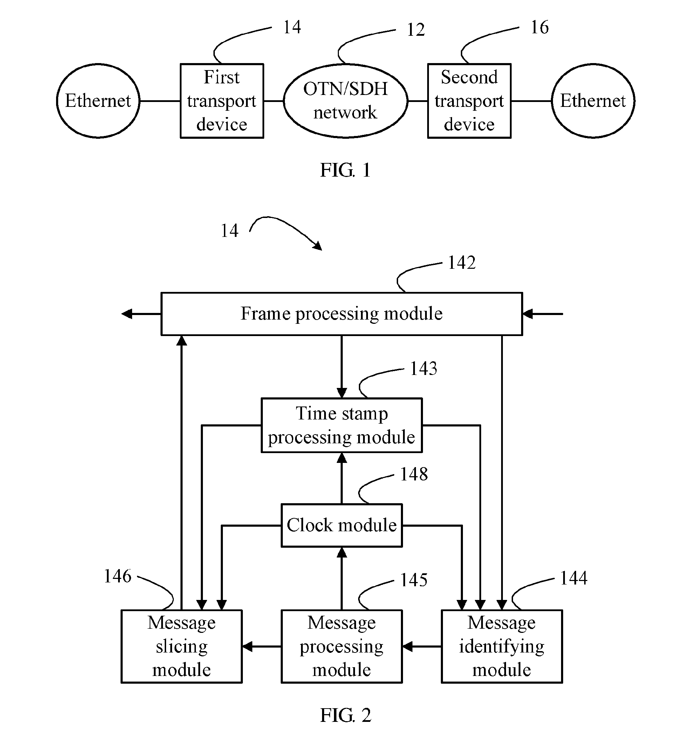

FIG. 1 is a network architecture diagram where a frame structure based OTN or SDH network 12 is connected to a packet structure based network such as an Ethernet via a first transport device 14 and a second transport device 16. The first transport device 14 and the second transport device 16 are configured to encapsulate received data packets in data frames and exchange the data frames via the OTN or SDH network 12. The roles of the two transport devices are interchangeable according to their master-slave relation when they implement a time synchronization. After a data frame is aligned, each bit in the frame is fixed. Therefore, any bit may mark a time stamp when the data frame is sent or received, and record the precise time. In the embodiments of the present invention, the first transport device 14 and the second transport device 16 use the frame header of a data frame to mark the time stamp and record the time when the data frame is sent or received. The data frame hereinafter may be a single frame or multiframe made up of multiple single frames.

FIG. 2 is a function block diagram of the first transport device 14 in FIG. 1. The first transport device 14 includes a frame processing module 142, a time stamp processing module 143, a message identifying module 144, a message processing module 145, a message slicing module 146, and a clock module 148. The clock module 148 provides the clock frequency and time required by the normal work of the first transport device 14. For example, the clock module 148 provides a real-time clock for the time stamp processing module 143 and provides a clock frequency for the message identifying module 144 and the message slicing module 146, etc.

The message processing module 145 generates a synchronization message periodically and sends the synchronization message to the message slicing module 146. The frequency of the message processing module 145 to generate the synchronization message may be set according to the requirement, for example, 156 bits or 1,024 bits per second.

The message slicing module 146 slices the received synchronization message into multiple data slices and sends the data slices to the frame processing module 142 one by one.

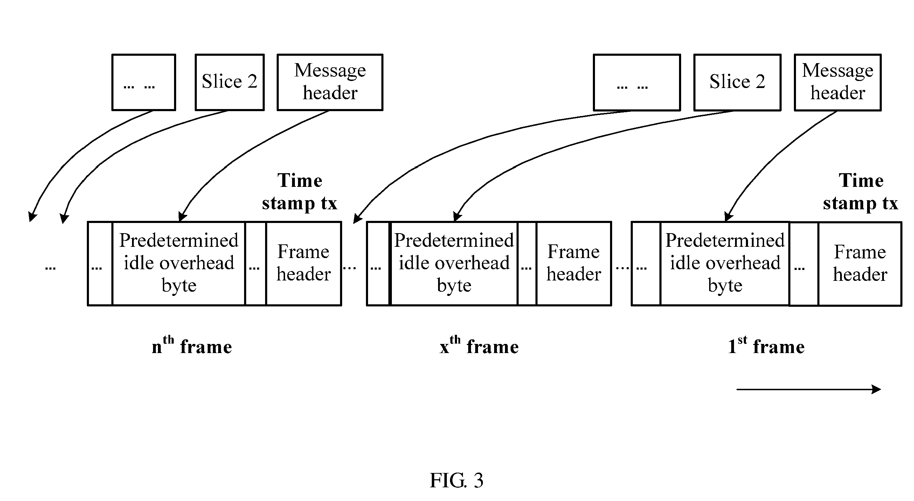

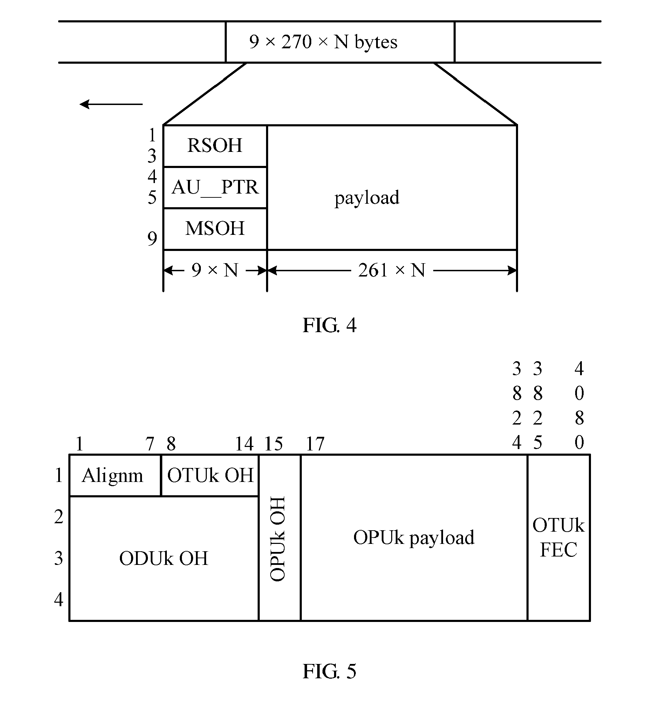

As shown in FIG. 3, the frame processing module 142 is configured to generate data frames and send the data frames to the second transport device 16. The frame processing module 142 inserts the data slices one by one to predetermined idle overhead bytes of data frames, identifies the frame header of each data frame, and triggers the time stamp processing module 143 to record the time when the frame processing module 142 sends the frame header of each data frame. The data frame is an OTN or SDH frame. The predetermined idle overhead byte may be set as a reserved byte in the MS overhead of the SDH frame shown in FIG. 4, such as a reserved byte behind the S 1 byte; or it may be a reserved byte in the OTUk or ODUk overhead in the OTN frame shown in FIG. 5.

As shown in FIG. 3, the time stamp processing module 143 triggers the message slicing module 146 to identify the message header of the synchronization message and uses the sending time of the frame header of a data frame related to the message header as a first time stamp t1, and sends the first time stamp t1 to the second transport device 16.

The frame processing module 142 also receives data frames from the second transport device 16, identifies the frame header of each data frame, and triggers the time stamp processing module 143 to record the time when the frame processing module 142 receives the frame header of each data frame.

The time stamp processing module 143 triggers the message identifying module 144 to identify the message header of a delay request message carried in the data frames, uses the receiving time of the frame header of a data frame related to the message header as a fourth time stamp t4, and sends the fourth time stamp t4 to the second transport device 16.

In single-step transfer mode, the first time stamp t1 is transferred in the time field of the synchronization message and the fourth time stamp t4 is transferred in a delay response message generated in response to the delay request message. In two-step transfer mode, the first time stamp t1 is transferred in a message following the synchronization message and the fourth time stamp t4 is transferred in a delay response message generated in response to the delay request message. In the embodiments of the present invention, the single-step transfer mode is used, where the time stamp processing module 143 places the first time stamp t1 in the time field of the synchronization message and places the second time stamp t4 in the delay response message generated in response to the delay request message. Then the synchronization message and the delay response message are sliced and the data slices of the messages are inserted to data frames and sent to the second transport device 16.

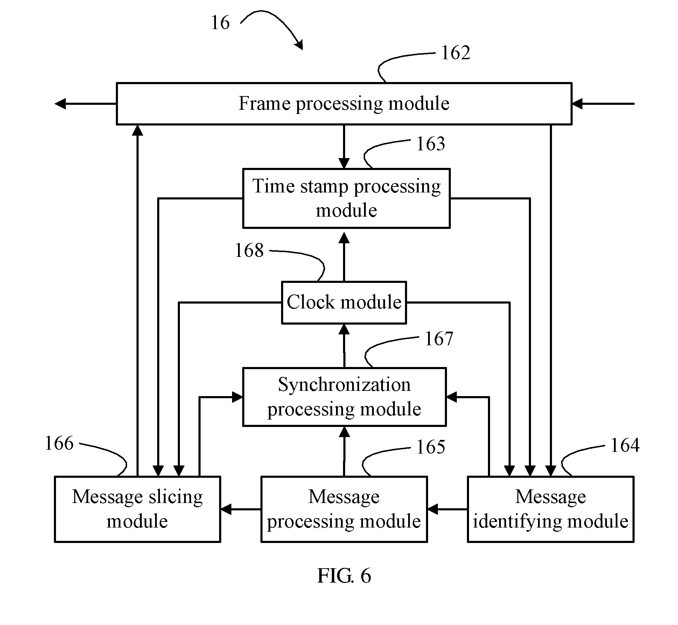

FIG. 6 is a function block diagram of the second transport device 16 in FIG. 1. The second transport device 16 includes a frame processing module 162, a time stamp processing module 163, a message identifying module 164, a message processing module 165, a message slicing module 166, a synchronization processing module 167, and a clock module 168. The clock module 168 provides the clock frequency and time required by the normal work of the second transport device 16. For example, the clock module 168 provides a real-time clock for the time stamp processing module 163 and provides a clock frequency for the message identifying module 164 and the message slicing module 166, etc.

The frame processing module 162 receives data frames from the first transport device 14, identifies the frame header of each data frame, and triggers the time stamp processing module 163 to record the time when the frame processing module 162 receives the frame header of each data frame.

The time stamp processing module 163 triggers the message identifying module 164 to identify the message header of a synchronization message carried in the data frames, uses the receiving time of the frame header of a data frame related to the message header as a second time stamp t2, and reports the second time stamp t2 to the synchronization processing module 167.

The message identifying module 164 also extracts data slices of the synchronization message and the delay response message from the data frames received by the frame processing module 162, assembles the data slices into the synchronization message and the delay response message, and triggers the message processing module 165 to extract the first time stamp t1 from the synchronization message and extract the fourth time stamp t4 from the delay response message, and reports the first time stamp t1 and fourth time stamp t4 to the synchronization processing module 167.

The message processing module 165 also generates a delay request message periodically and sends the delay request message to the message slicing module 166. The frequency of the message processing module 165 to generate the delay request message may be set according to the requirement, for example, 8 bits or 16 bits per second. This frequency is far lower than the frequency of generating the synchronization message by the message processing module 145.

The message slicing module 166 slices the received delay request message into multiple data slices and sends the data slices to the frame processing module 162 one by one.

As shown in FIG. 3, the frame processing module 162 is configured to generate data frames and send the data frames to the first transport device 14. The frame processing module 162 inserts the data slices one by one to predetermined idle overhead bytes of data frames, identifies the frame header of each data frame, and triggers the time stamp processing module 163 to record the time when the frame processing module 162 sends the frame header of each data frame. The data frame is an OTN or SDH frame. The predetermined idle overhead byte may be set as a reserved byte in the MS overhead of the SDH frame shown in FIG. 4, such as a reserved byte behind the S 1 byte; or it may be a reserved byte in the OTUk or ODUk overhead in the OTN frame shown in FIG. 5.

As shown in FIG. 3, the time stamp processing module 163 triggers the message slicing module 166 to identify the message header of the delay request message and uses the sending time of the frame header of a data frame related to the message header as a third time stamp t3, and sends the third time stamp t3 to the synchronization processing module 167.

The synchronization processing module 167 performs calculations on the received series of the first time stamp t1, second time stamp t2, third time stamp t3, and fourth time stamp t4 and adjusts the clock frequency and time of the clock module 168 according to the calculation results to synchronize the clock and time of the second transport device 16 with the clock and time of the first transport device 14.

Specifically, after receiving a series of first time stamps t1 and second time stamps t2, the synchronization processing module 167 calculates a difference Δt1 between adjacent first time stamps t1 and a difference Δt2 between adjacent second time stamps t2. If Δt1 > Δt2, it indicates that the clock frequency of the first transport device 14 is higher than that of the second transport device 16, and clock module 168 is controlled to raise clock frequency; if Δt1 ≤ Δt2, the clock module 168 is controlled to reduce clock frequency. Thereby, the clock of the second transport device 16 is synchronized with the clock of the first transport device 14.

The synchronization processing module 167 also calculates the time offset Offset between the second transport device 16 and the first transport device 14 according to the equation Offset = [(t2 - t1) - (t4 - t3)]/2 and adjusts the time of the clock module 168 according to the time offset to synchronize the time of the second transport device 16 with the time of the first transport device 14. This equation is also the one used by IEEE 1588 v2 to calculate the time offset Offset.

In the transport devices in the above embodiments of the present invention, the data frame related to the message header may be set as a data frame that carries the message header or set as a data frame located in a fixed position behind the data frame that carries the message header.

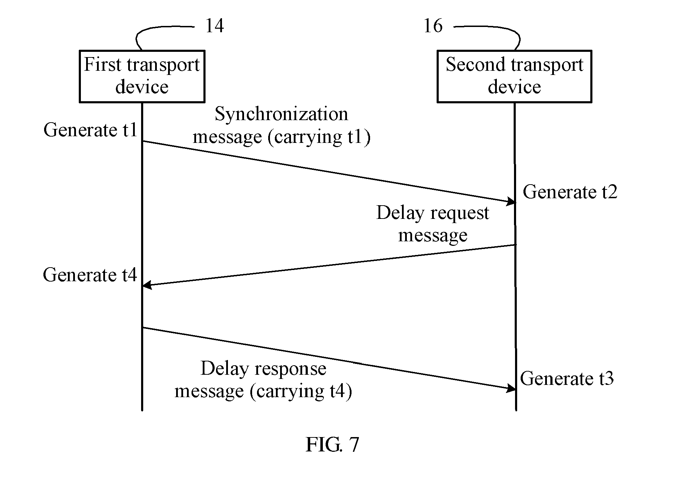

FIG. 7 is a flowchart of a method for clock and time synchronization between the second transport device 16 and the first transport device 14 in FIG. 1. The method includes the following steps:

Step S201: The first transport device 14 sends data frames to the second transport device 16 and records the sending time of the frame header of each data frame, generates a synchronization message periodically, inserts slices to predetermined idle overhead bytes of data frames after slicing the generated synchronization message, uses the sending time of the frame header of a data frame related to the message header of the synchronization message as the first time stamp t1, and sends the first time stamp t1 to the second transport device 16. The frequency of the first transport device 14 to generate the synchronization message may be set according to the requirement, for example, 156 bits or 1,024 bits per second.

Step S202: The second transport device 16 receives the data frames from the first transport device 14 and records the receiving time of the frame header of each data frame, identifies the message header of the synchronization message in the data frames, uses the receiving time of the frame header of a data frame related to the message header as the second time stamp t2, and receives the first time stamp t1 from the first transport device 14.

Step S203: The second transport device 16 sends data frames to the first transport device 14 and records the sending time of the frame header of each data frame, generates a delay request message periodically, inserts slices to predetermined idle overhead bytes of data frames after slicing the generated delay request message, and uses the sending time of the frame header of a data frame related to the message header of the delay request message as the third time stamp t3. The frequency of the second transport device 16 to generate the delay request message may be set according to the requirement, for example, 8 bits or 16 bits per second. This frequency is far lower than the frequency of generating the synchronization message by the first transport device 14.

Step S204: The first transport device 14 receives the data frames from the second transport device 16 and records the receiving time of the frame header of each data frame, identifies the message header of the delay request message in the data frames, uses the receiving time of the frame header of a data frame related to the message header as the fourth time stamp t4, and sends the fourth time stamp t4 to the second transport device 16.

Step S205: The second transport device 16 performs calculations on the first time stamp t1, second time stamp t2, third time stamp t3, and fourth time stamp t4 and adjusts clock frequency and time according to the calculation results to synchronize clock and time with the first transport device 14.

Specifically, after receiving a series of first time stamps t1 and second time stamps t2, the second transport device 16 calculates the difference Δt1 between adjacent first time stamps t1 and the difference Δt2 between adjacent second time stamps t2. If Δt1 > Δt2, it indicates that the clock frequency of the first transport device 14 is higher than that of the second transport device 16 and the clock frequency of the second transport device 16 is raised; if Δt1 ≤ Δt2, the clock frequency of the second transport device 16 is reduced. Thereby, the clock of the second transport device 16 is synchronized with the clock of the first transport device 14.

The second transport device 16 also calculates the time offset Offset between the second transport device 16 and the first transport device 14 according to the equation Offset = [(t2 - t1) - (t4 - t3)]/2 and adjusts the time of the second transport device 16 according to the time offset to synchronize its time with the time of the first transport device 14. This equation is also the one used by IEEE 1588 v2 to calculate the time offset Offset.

In the above method embodiment, in single-step transfer mode, the first time stamp t1 is transferred in the time field of the synchronization message and the fourth time stamp t4 is transferred in a delay response message generated in response to the delay request message; in two-step transfer mode, the first time stamp t1 is transferred in a message following the synchronization message and the fourth time stamp t4 is transferred in a delay response message generated in response to the delay request message.

In the above method embodiment, the data frame related to the message header may be set as a data frame that carries the message header or a data frame located in a fixed position behind the data frame that carries the message header. The predetermined idle overhead byte of the data frame is a reserved byte in the MS overhead of the SDH frame shown in FIG. 4, such as a reserved byte behind the S 1 byte; or it is a reserved byte in the OTUk or ODUk overhead in the OTN frame shown in FIG. 5.

In an OTN or SDH network, messages may only sent through a fixed byte in each data frame and therefore multiple data frames are required to transfer one message. Therefore, the sender transport device slices a message into multiple data slices and inserts the data slices one by one in predetermined idle overhead bytes of data frames to transfer the slices; the receiver transport device then assembles the data slices into the message.

The description above is only exemplary embodiments of the present invention, but the scope of the present invention is not limited thereto. Any modification or substitution readily conceivable by those skilled in the art within the scope of the technology disclosed by the present invention shall fall within the scope of the present invention. Therefore, the scope of the present invention is defined by the scope of the appended claims.

## Claims

1. A clock and time synchronization method, comprising:
inserting, by a first transport device after slicing a generated synchronization message, slices in predetermined idle overhead bytes of data frames, using sending time of a predetermined bit of a data frame related to a message header of the synchronization message as a first time stamp t1, and sending the first time stamp t1 to a second transport device, wherein the data frames are OTN or SDH frames;
receiving, by the second transport device, the data frames sent by the first transport device, identifying the message header of the synchronization message in the received data frames, and using receiving time of the predetermined bit of the data frame related to the message header as a second time stamp t2;
sending, by the second transport device, data frames to the first transport device, inserting slices to predetermined idle overhead bytes of the data frames after slicing a generated delay request message, and using sending time of a predetermined bit of a data frame related to a message header of the delay request message as a third time stamp t3;
receiving, by the first transport device, the data frames sent by the second transport device, identifying the message header of the delay request message in the received data frames, using receiving time of the predetermined bit of the data frame related to the message header as a fourth time stamp t4, and sending the fourth time stamp t4 to the second transport device; and
performing, by the second transport device, calculations on the first time stamp t1, second time stamp t2, third time stamp t3, and fourth time stamp t4 and adjusting clock frequency and time according to calculation results to synchronize clock and time with the first transport device.

2. The method according to claim 1, wherein the predetermined idle overhead byte of the data frame is a reserved byte in a MS overhead of an SDH frame, or a reserved byte in an OTUk or ODUk overhead of an OTN frame.

3. The method according to claim 1, wherein the data frame related to the message header is a data frame that carries the message header or a data frame located in a fixed position behind the data frame that carries the message header.

4. The method according to claim 1, wherein: the second transport device calculates a difference Δt1 between adjacent first time stamps t1 and a difference Δt2 between adjacent second time stamps t2 and adjusts the clock frequency of the second transport device according to a comparison result between Δt1 and Δt2 to synchronize the clock of the second transport device with the clock of the first transport device.

5. The method according to claim 4, wherein: the second transport device also calculates a time offset Offset between the second transport device and the first transport device according to an equation Offset = [(t2 - t1) - (t4 - t3)]/2 and adjusts the time of the second transport device according to the time offset to synchronize the time of the second transport device with the time of the first transport device.

6. A transport device (16), comprising a frame processing module (162), a time stamp processing module (163), a message identifying module (164), a message processing module (165), a message slicing module (166), a synchronization processing module (167), and a clock module (168), wherein:
the frame processing module (162) receives data frames from a peer transport device (14), identifies a predetermined bit of each data frame, and triggers the time stamp processing module (163) to record receiving time of the predetermined bit;
the time stamp processing module (163) triggers the message identifying module (164) to identify a message header of a synchronization message carried in the data frames and uses receiving time of the predetermined bit of a data frame related to the message header as a second time stamp t2;
the message identifying module (164) also triggers the message processing module (165) to extract a first time stamp t1 and a fourth time stamp t4 from the data frames received by the frame processing module (162), respectively, wherein the first time stamp t1 is the time when the predetermined bit of a data frame related to the message header of the synchronization message is sent by the peer transport device (14) and the fourth time stamp t4 is the time when the predetermined bit of a data frame related to a message header of a delay request message is received by the peer transport device (14);
the message processing module (165) also sends the delay request message to the message slicing module (166);
the message slicing module (166) slices the delay request message to multiple data slices;
the frame processing module (162) inserts the data slices one by one to data frames and sends the data frames to the peer transport device (14), identifies the predetermined bit of each data frame, and triggers the time stamp processing module (163) to record sending time of the predetermined bit;
the time stamp processing module (163) triggers the message slicing module (166) to identify the message header of the delay request message and uses sending time of the predetermined bit of a data frame related to the message header as a third time stamp t3; and
the synchronization processing module (167) performs calculations on the first time stamp t1, second time stamp t2, third time stamp t3, and fourth time stamp t4 and adjusts the clock frequency and time of the clock module (168) according to calculation results to synchronize the clock and time with the peer transport device (14).

7. The transport device according to claim 6, wherein the predetermined idle overhead byte of a data frame is a reserved byte in a MS overhead of a SDH frame, or a reserved byte in an OTUk or ODUk overhead of an OTN frame.

8. The transport device according to claim 6, wherein the data frame related to the message header is a data frame that carries the message header or a data frame located in a fixed position behind the data frame that carries the message header.

9. The transport device according to claim 6, wherein: the synchronization processing module (167) calculates a difference Δt1 between adjacent first time stamps t1 and a difference Δt2 between adjacent second time stamps t2 and adjusts the clock frequency of the clock module (168) according to a comparison result between Δt1 and Δt2 to synchronize the clock with the first transport device (14).

10. The transport device according to claim 9, wherein: the synchronization processing module (167) calculates a time offset Offset between the transport device (16) and the peer transport device (14) according to an equation Offset = [(t2 - t1) - (t4 - t3)]/2 and adjusts the time of the clock module (168) according to the time offset to synchronize time with the peer transport device (14).
